# EUROPEAN PATENT APPLICATION

(11) **EP 2 418 383 A2**
(43) Date of publication of application: **15.02.2012**
(21) Application number: 11167174.9
(22) Date of filing: 23.05.2011
(51) Int. Cl.: F03D 11/00

(54) **Self-supporting platform for a wind turbine**

(30) Priority: 26.05.2010 US 787821
(71) Applicant: General Electric Company, Schenectady, NY 12345 (US)
(72) Inventor: Vemuri, Satish, 560078 Bangalore (IN); Stephens, Kharyl Evenson George, Greenville, SC 29615-4614 (US); Karaca, Hueseyin, 44625 Herne (DE); Paura, Ingo, 49716 Meppen (DE); Venkatakrishnappa, Raghunandan Chickballapur, 562101 Karnataka (IN)
(74) Representative: Bedford, Grant Richard

(57) **Abstract**

A self-supporting platform for a tower 520, comprises a grid structure 10 having a plurality of grid nodes, wherein the grid structure 10 transfers a load on the platform to the wall of the tower.

## Description

The present disclosure relates generally to wind turbines. More particularly, it relates to platforms for towers of wind turbines.

Platforms in wind turbines provide operators safe access to areas of a wind turbine that may require servicing, maintenance and inspection. Such areas pertain e.g. to flanges and the nacelle. Typically, a number of service platforms is located at different heights in the turbine. The platforms are typically fixed by welding or with screws to the wall of the tower.

Conventional types of platforms include a metal plate, typically a checker plate, which is supported by a number of steel beams fixed to the walls of the turbine. Steel beams are heavy, have to be lifted with a crane when mounting the platform in the tower, and are thus generally difficult to install. Further, a significant number of bosses, clip plates or the like are necessary to mount the plate to the beams, which is both time- and cost intensive.

A further conventional design, called bent plate, includes a self-supporting platform, which includes a metal sheet. The round platform may have at least two positions where the sheet has been cold formed such that a double layered I-section is formed which protrudes along the width of the platform. This vertical sheet section of the platform provides for stability. Yet, the cold forming process is technically demanding and cost intensive.

In light of the above, it is desirable to have a platform for a wind turbine tower which is both lightweight, easy to produce and easy to assemble.

In view of the above, various aspects and embodiments of a platform and a wind turbine according to the appended claims are provided.

Various advantages, features, aspects and details are apparent from the dependent claims, the description and drawings.

According to an embodiment, a self-supporting platform for a wind turbine tower is provided, which includes a grid structure including a plurality of grid nodes, wherein the grid structure transfers a load on the platform to the wall of the tower.

According to a further embodiment, a wind turbine is provided, which includes a tower, a nacelle, a hub, at least two rotor blades, and a self-supporting platform located in the tower. The platform includes a grid structure, and fixation elements at the wall of the tower, wherein the grid structure is adapted to transfer a load on the platform to the fixation elements.

Embodiments are also directed at apparatuses for carrying out the disclosed methods and including apparatus parts for performing each described method step. These method steps may be performed by way of hardware components, a computer programmed by appropriate software, by any combination of the two or in any other manner. Furthermore, embodiments according to the invention are also directed at methods by which the described apparatus operates. It includes method steps for carrying out every function of the apparatus

Various aspects and embodiments of the present invention will now be described in connection with the accompanying drawings, in which:
Fig. 1 shows a perspective top view of a platform according to an embodiment;
Fig. 2 shows a perspective bottom view of a platform according to an embodiment;
Fig. 3 shows a perspective side view of a platform according to an embodiment;
Fig. 4 shows a schematic detailed view of a platform according to an embodiment;
Fig. 5 shows a schematic detailed view of a platform according to an embodiment;
Fig. 6 shows a schematic detailed view of a platform according to an embodiment;
Fig. 7 shows a perspective top view of a platform according to a further embodiment;
Fig. 8 shows a perspective bottom view of a platform according to a further embodiment;
Fig. 9 shows a top view of the platform according to the embodiment of Fig. 8;
Fig. 10 shows a bottom view of the embodiment of Fig. 9;
Fig. 11 shows a cross sectional view of a platform according to an embodiment;
Fig. 12 shows a detailed cross-sectional view of a further embodiment;
Fig. 13 shows a detailed cross-sectional view of the embodiment of Fig. 12;
Fig. 14 shows a schematic view of a yet further embodiment.

Reference will now be made in detail to the various embodiments of the invention, one or more examples of which are illustrated in the figures. Each example is provided by way of explanation of the invention, and is not meant as a limitation of the invention. For example, features illustrated or described as part of one embodiment can be used on or in conjunction with other embodiments to yield yet a further embodiment. It is intended that the present invention includes such modifications and variations.

A platform according to various embodiments is self-supporting and includes a grid structure as a load-carrying element. The grid structure takes up the load on the platform, as well as the weight of the platform itself, and transfers the load typically directly to a wall of the tower in which it is mounted. Hence, the grid structure or grating itself takes up the load and transfers it to a fixation at the wall, wherein no further elements like beams or the like are part of the force transmission chain between load and the fixation elements at the wall. There are a variety of ways in order to design such a platform. In embodiments that may be combined with other embodiments described herein, the structure may be coherent or include a plurality of single grid sections mounted together. In an embodiment, the tower is part of a wind turbine, and the platform is a service platform. One or more steel beams may additionally support the platform, yet the platform is typically designed such that no further support is necessary additional to the grid structure. The dimensions of the platform and the supporting elements are strongly dependent on the size of the structure in which the platform is employed and on the load which shall be carried by the platform. All data provided is by means of example only and is for typical embodiments used in the tower of a wind turbine.

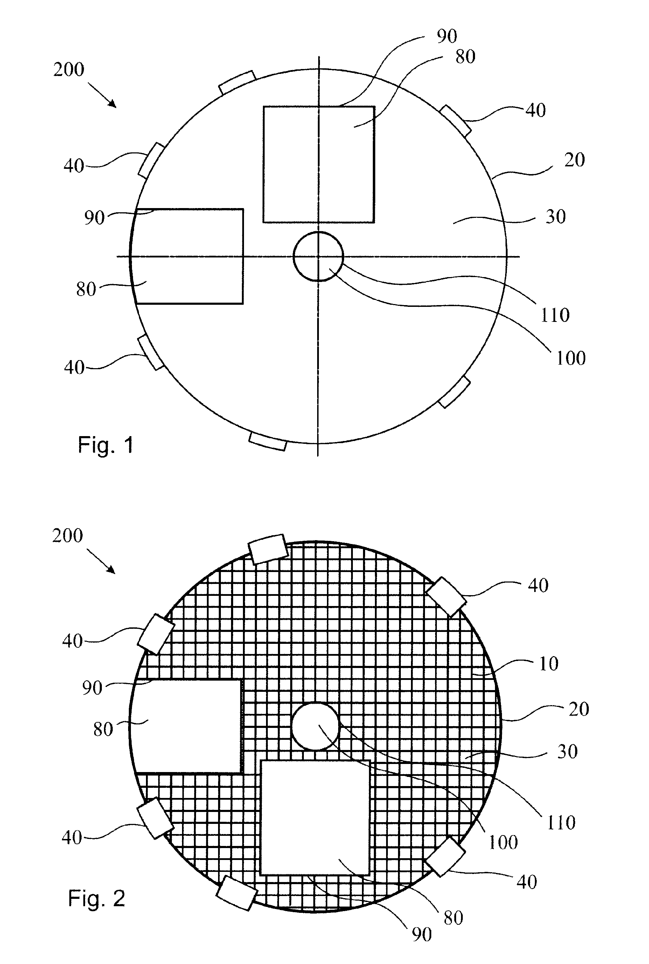

Fig. 1 shows a top view of an embodiment of a platform 200, of which the bottom view is shown in Fig. 2. In the embodiment, the load carrying grid structure is a plane grating 10, typically substantially made of metal, more typically of aluminum alloy and/or steel. In the non-limiting example shown, the grating has square type cells. A typical thickness of the sheets (or elements) of which the grating is formed is 1 mm to 6 mm, more typical 2 mm to 4 mm. Also other cell shapes are possible, e.g. the grating may include triangles, pentagons or any other higher order polygon, also a circular shape is possible. Further, in the example, the diameter of the cell is constant over the width of the grating. A typical width of one square cell is 2 cm to 15 cm, more typically from 4 cm to 10 cm. In other embodiments, various cell layers may be combined, such that e.g. a multi-cell structure in all spatial directions is the result, such as a so called honeycomb structure. Typical designs are well known to a skilled person.

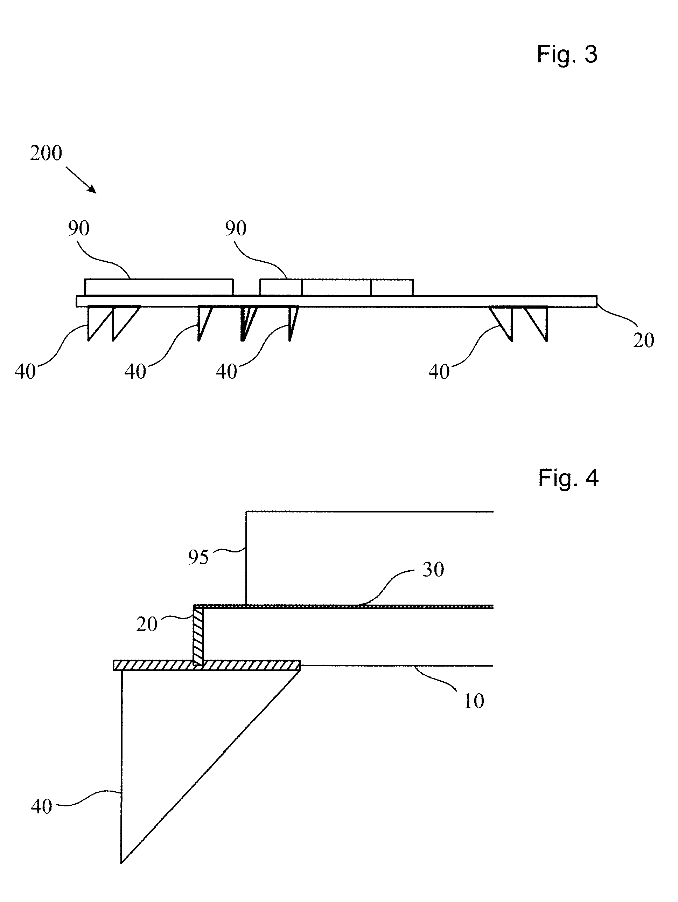

On the grating, a plate 30 may be provided, typically made of metal, such as a chequered plate. The plate provides that no small parts or service tools can fall through the grid 10, or, depending on the size of the cells, provides for safety for individuals stepping on the platform. The plate has a typical thickness of from 1 mm to 5 mm, more typically from 2 mm to 4 mm. Fig. 3 shows a side view of the embodiment of the platform of Figs. 1 and 2. In these embodiments, the platform has a diameter from 1.5 m to 8 m, more typically from 2 m to 6 m. The grating has, in the vertical direction, a typical dimension from 2 cm to 10 cm, more typically from 4 cm to 7 cm. This strongly depends on the desired load bearing capacity. The examples described herein have typically a total load bearing capacity from typically 5 kN to 20 kN, more typically from 8 kN to 15 kN.

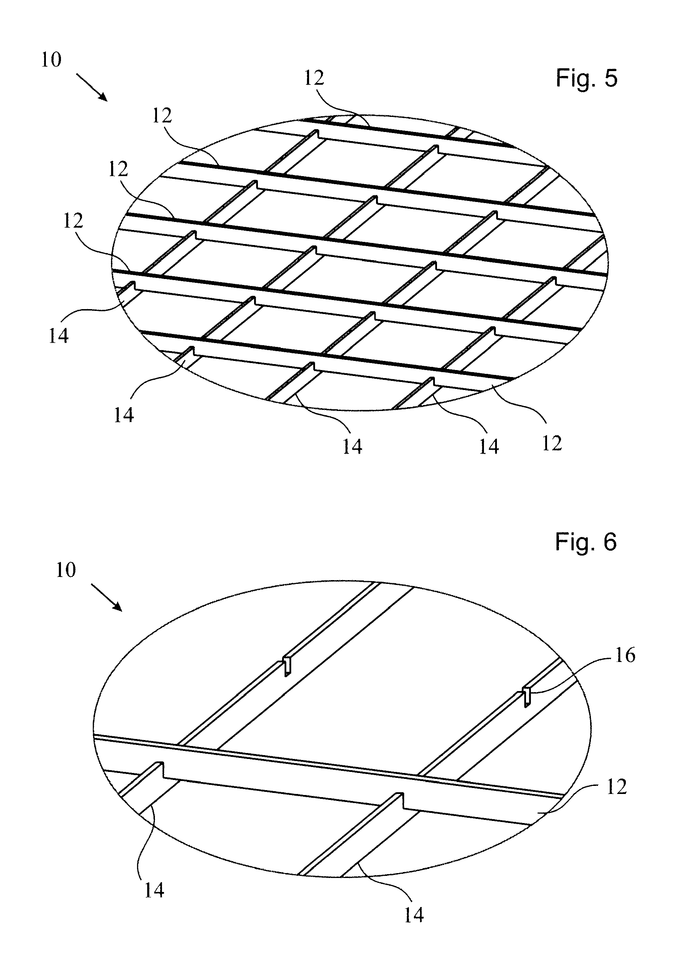

Fig. 5 shows a detailed view of the grating 10 of an embodiment of platform 200, Fig. 6 shows an even more detailed view where one single element 12 of the grating is removed. The elements 12, 14 forming the grating are mounted together by a weldless interlock mechanism as depicted. In an embodiment, two types 12, 14 of elements are employed, wherein one type 14 includes recesses 16. In another embodiment, both elements 12, 14 are identical and both include recesses 16. As no welding is necessary, the grating is both easy and cheap to produce. Other embodiments pertain to gratings including welded elements or where adhesive bonding joins the elements, or by any combination of these described methods.

A number for the classification of a grid according to an embodiment is the number of nodes, i.e. geometrical crossings between elements 12, 14 of grating 10 in this case. A platform according to the embodiment as shown in Fig. 2 may have about 600 nodes, typically gratings according to embodiments have from 100 nodes to 3000 nodes, more typically from 200 nodes to 1200 nodes. The number of nodes may be considered indicative of the ability of the grid to evenly distribute load applied to the grid. Furthermore, the number of nodes is related to the number of beams within the grid, in particular the number of beams within the area of the grid. Thus, the number of nodes may also be considered indicative of the grid stiffness and of the grid's ability to transfer load to a grid support.

The platform as depicted in Fig. 1 and Fig. 2 may comprise at least one hatch 80. In the depicted embodiment, two hatches 80 are provided. They may have a width and length from 60 cm to 130 cm, more typically from 80 cm to 110 cm. If they are not equipped with a shutting mechanism, such as is the case in the depicted example, toe boards 90 are typically provided around the openings for safety reasons. The same applies to the duct 100, which may e.g. serve as a cable pit and is surrounded by a toe board 110. The toe boards are typically from 5 cm to 15 cm high, more typically from 8 cm to 13 cm.

The platform grating 10 may in an embodiment be directly fixed to a wall of a tower, e.g. by welding, by screws or adhesive bonding. In the depicted embodiments of Fig. 1 to Fig. 4, the platform 200 includes an outer ring or rim 20, typically made of a metal sheet, along its outline. The ring or rim has typically a height from 30 mm to 250 mm, more typically from 50 mm to 220 mm. It is typically welded to the grating, but may in other embodiments also be fixed by screws, bolts or the like. The ring or rim may also have a round cross section. In an embodiment, the platform 200 rests on a plurality of brackets 40 fixed to a wall of the tower, e.g. by welding or screwing.

In Fig. 4 it is shown how the ring 20 fits into a groove of the wall-mounted bracket 40. Typically, the brackets have a width in a circumferential direction of the platform from 15 cm to 45 cm, more typically from 20 cm to 40 cm. The groove has typically a width of the dimension of the thickness of ring 20, which is from 1 mm to 6 mm, more preferably from 2 mm to 5 mm. The depth of the groove is from 2 mm to 10 mm, typically from 3 mm to 7 mm. By this interlocking, a quick and stable mounting of the platform inside the tower is possible, whereby no welding or bolts are necessary. In other embodiments, other fixation methods including welding or bolt-based mounting are possible.

In a further embodiment, the platform comprises a plurality of interconnected grating elements. The elements may be joined by screws or be welded together. If the mounting of the platform is carried out at the site of the tower, an easier transport of the platform elements is provided in comparison to the transport of the whole platform.

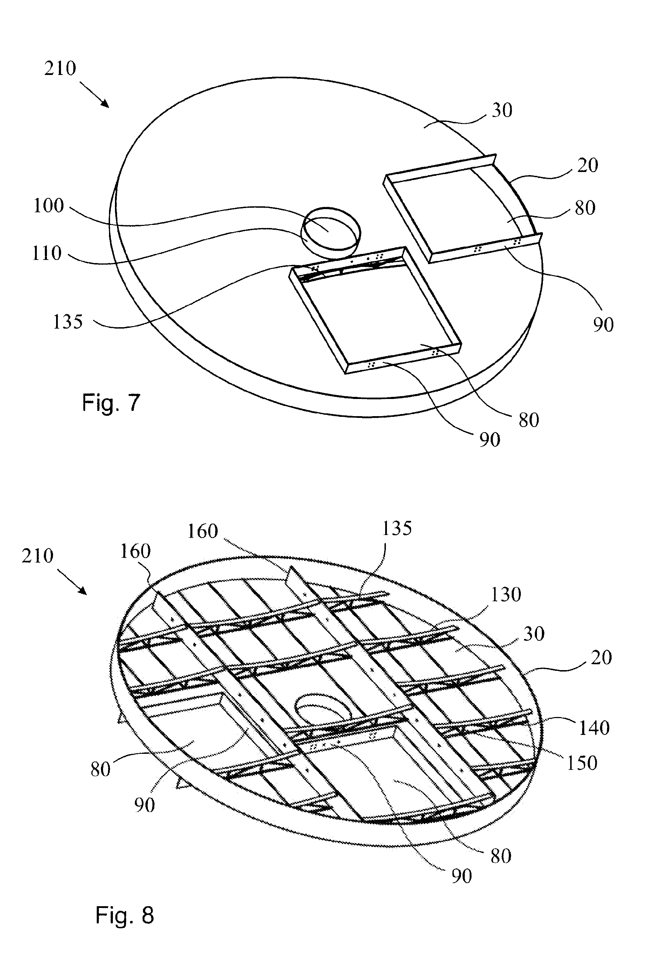

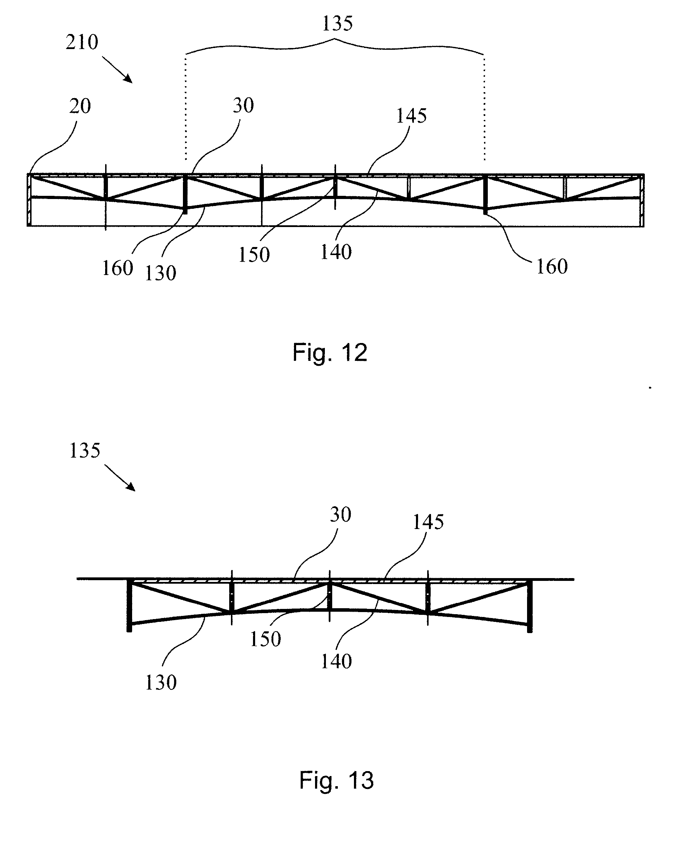

Fig. 7 and 8 respectively show a top view and a bottom view of a further embodiment of a self-supporting platform. The platform 210 comprises a plate 30 which is supported by at least one elongated truss section 135 as a load carrying element, in the depicted embodiment a number of truss sections 135 are combined. They protrude parallel to each other, the distance between the different parallel sections may be from 20 cm to 1 m, more typically from 30 cm to 80 cm. An embodiment of a platform with truss sections 135 is also depicted in Fig. 12. Fig. 13 shows a truss section. In the exemplary embodiment of Fig. 8, two metal sheets 160 are provided as a stabilizing element in a direction perpendicular to the direction of the elongated truss sections 135. In the embodiment, the sheets serve as connection elements between consecutive truss sections 135. In other embodiments, the truss sections may protrude parallel to each other along the entire width of the platform. The sheets 160 do not necessarily contribute significantly to the load bearing, but are intended to primarily serve as a stabilizing element for truss sections 160. In other embodiments, additional truss sections 135 may be provided instead of sheets 160. Also the number of metal sheets may vary from 1 to 8, more typically from 2 to 6. In yet further embodiments, the truss sections may not be formed substantially elongated, but one or more three-dimensional truss complexes spread over a wide area of the platform, each covering from 10 percent to 100 percent of the platform area.

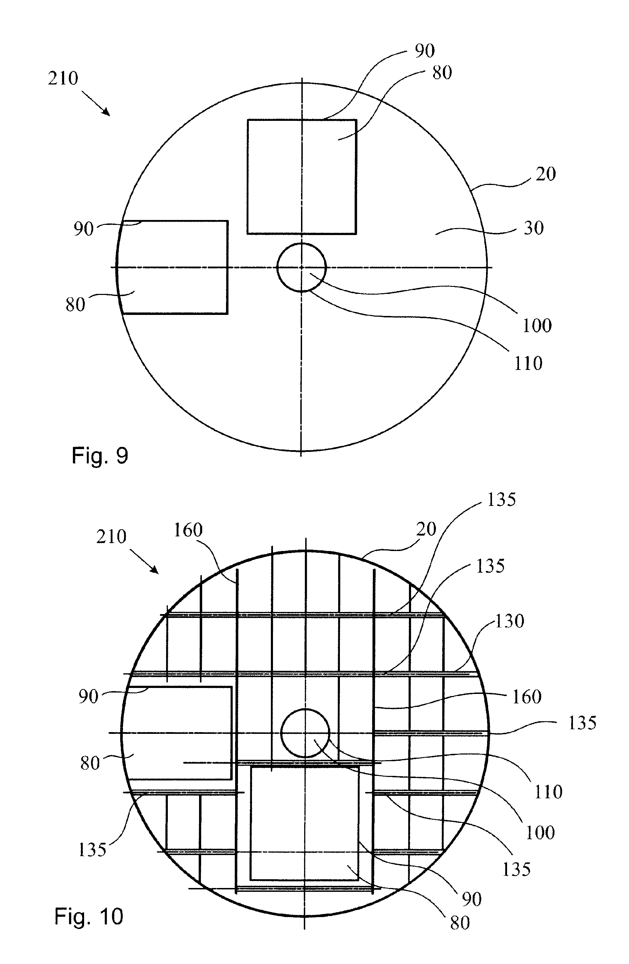

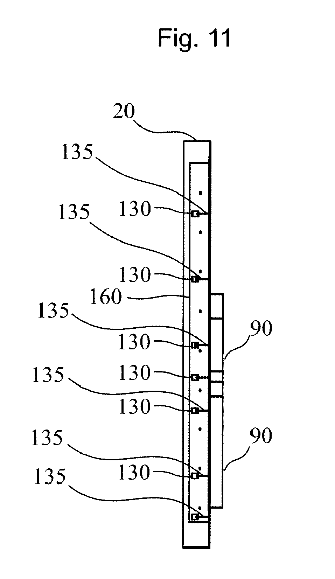

Other embodiments show different configurations of truss sections. For example, the elongated truss elements may be arranged rectangular to each other such as to form a grid with a number of nodes along the diameter of the platform. Fig. 9 and Fig. 10 show another top view and bottom view of the embodiment shown in Fig. 7 and Fig. 8. In Fig. 11, a side view is depicted. Some features in the figures, such as the hatches 80, are identical to those of previously described embodiments with the same numerals and are not described again.

In the embodiments shown in Figs. 7 to Fig. 11, each truss section further comprises an arc element 130, which provides for additional stability. Also embodiments including truss sections with a greater number of arcs are possible. The arc element is typically a segment of a circle with a radius of from 2 m to 10 m, more typically from 3 m to 6 m. The arc length of the arc element may be from 60 cm to 6 m, more typically from 80 cm to 4 m, even more typically from 1 m to 2 m.

Fig. 12 shows a cross sectional view of the embodiment of the platform of Figs. 7 to 11. The platform 210 includes an outer ring or rim 20, typically made of a metal sheet, along its outline. The ring has typically a height from 30 mm to 250 mm, more typically from 50 mm to 220 mm. It is typically welded to the truss sections 135 but may in other embodiments also be fixed by screws, bolts or the like. As can be seen in Fig. 12, more than one truss sections 135 of Fig. 13 or segments thereof may be joined to achieve an appropriate length covering the whole diameter of platform 210.

Fig. 13 shows a more detailed view of the truss section 135 as included in some embodiments described herein. The truss includes angled supports 140 and vertical supports 150, and at least one straight top element 145. The arc 130 serves for additional stability. In other embodiments, arc 130 may be replaced by a straight element. Portions of the elements 140, 145, 150, 130 are typically welded to other elements, e.g. at their respective end portions, but also other methods such as adhesive bonding are regarded to fall into the scope of the application. The platform 210 is typically pre-mounted and put in place at the wind turbine tower as a whole. In the described embodiments, the truss section has a typical length from 50 cm to 2 m, more typically from 70 cm to 1.5 m. The vertical supports have a typical length from 50 mm to 250 mm, more typically from 60 mm to 180 mm. The angled supports have a typical length from 20 cm to 60 cm, more typically from 25 cm to 40 cm.

It will be understood that all described embodiments herein are only examples for possible configurations and may be varied in a number of ways. In particular, the design of the truss configurations, their dimensioning, the number of truss elements used, their material and their arrangement depends essentially on the purpose of the platform, e.g. the dimensioning and the load bearing capacity which shall be achieved. Respective calculations and possible design options are well known to a skilled person. Hence, also the employment of very different truss configurations is regarded to fall into the scope of the present invention.

A number for the classification of a grid structure according to an embodiment is the number of nodes. These are the geometrical points where vertical supports 150, diagonal supports 140, top sections 145 and the arc sections 130 are mounted or welded to each other. Therein, nodes with more than two intersecting elements are also only counted once. A platform according to the embodiment as shown in Fig. 8 may have about 100 nodes, typically platforms according to embodiments herein have from 20 nodes to 400 nodes, more typically from 70 nodes to 250 nodes.

In an embodiment, the truss sections with their components are made from steel. In another embodiment, they comprise an aluminum alloy, which provides for lower weight.

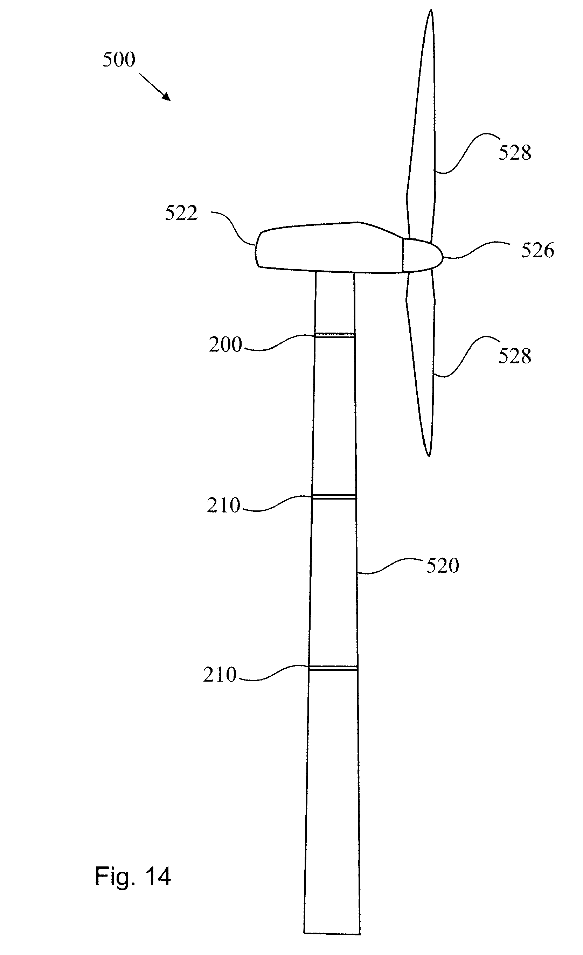

Fig. 14 shows an embodiment of a wind turbine 500 comprising a number of platforms 200, 210 according to embodiments described herein. The turbine further comprises a tower 520, a nacelle 522, and at least two rotor blades 528. The number of platforms and their respective heights depend on the individual configuration of the wind turbine. The number of platforms employed is typically from 2 to 6, more typically from 3 to 5. In a non-limiting example, platforms are provided at 4.4 m height (4.2 m platform diameter), at 21 m (4.2 m diameter), at 46 m (3.3 m diameter), at 68 m (2.7 m diameter) and at 75 m (2.5 m diameter).

This written description uses examples to disclose the invention, including the preferred mode, and also to enable any person skilled in the art to make and use the invention. While the invention has been described in terms of various specific embodiments, those skilled in the art will recognize that the invention can be practiced with modification within the spirit and scope of the claims. Especially, mutually nonexclusive features of the embodiments described above may be combined with each other. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A self-supporting platform for a wind turbine tower, comprising grid structure comprising a plurality of grid nodes,
   wherein the grid structure transfers a load on the platform to the wall of the tower.
2. The platform of clause 1, wherein the grid structure is a substantially plane metal grating.
3. The platform of any preceding clause, wherein the grating comprises elements selected from the group: a circle, a triangle, a square, a rectangle, a pentagon, a hexagon, a septagon, an octagon, or combinations thereof.
4. The platform of any preceding clause, wherein the platform further comprises a continuous ring comprising a metal element, preferably having a substantially rectangular cross section.
5. The platform of any preceding clause, wherein the ring is fixed to outermost sections of the grating, preferably by welding.
6. The platform of any preceding clause,
   further comprising fixation elements for mounting to the tower wall, preferably brackets, and wherein the ring of the platform is adapted to fit into grooves in the fixation elements.
7. The platform of any preceding clause, wherein the grating comprises aluminum.
8. The platform of any preceding clause, wherein the grating comprises at least one element selected from the group consisting of: a hatch, and a duct.
9. The platform of any preceding clause, further comprising a plate on the grid structure.
10. The platform of any preceding clause, wherein the grating comprises at least two interconnected grating elements.
11. The platform of any preceding clause, further comprising a plate, and wherein the plate is supported by the grid structure comprising a plurality of truss sections as load carrying elements.
12. The platform of any preceding clause, wherein the truss sections are elongated and protrude in a direction parallel to the plate.
13. The platform of any preceding clause, wherein at least one truss section further comprises an arc element.
14. The platform of any preceding clause, wherein the platform further comprises a continuous ring comprising a metal element, preferably having a substantially rectangular cross section.
15. The platform of any preceding clause, wherein the ring is fixed to outermost sections of the truss sections.
16. The platform of any preceding clause,
   further comprising fixation elements for mounting to the tower wall, preferably brackets, and wherein the ring of the platform is adapted to fit into grooves in the fixation elements.
17. A wind turbine, comprising:
   a tower,
   a nacelle,
   a hub,
   at least two rotor blades,
   a self-supporting platform located in the tower, comprising a grid structure comprising a plurality of grid nodes,
   fixation elements at the wall of the tower,
   wherein the grid structure is adapted to transfer a load on the platform to the fixation elements.
18. A wind turbine according to any preceding clause, further comprising a plate, and wherein the plate is supported by the grid structure comprising a plurality of truss sections as load carrying elements.

## Claims

1. A self-supporting platform (200) for a tower (520), comprising a grid structure (10) comprising a plurality of grid nodes,
wherein the grid structure (10) transfers a load on the platform (200) to a wall of the tower (520).

2. The platform (200) of claim 1, wherein the grid structure (10) is a substantially plane metal grating comprising elements selected from the group: a circle, a triangle, a square, a rectangle, a pentagon, a hexagon, a septagon, an octagon, or combinations thereof.

3. The platform (200) of any preceding claim, further comprising a plate (30) on the grid structure (10).

4. The platform (200) of any preceding claim, wherein the grating comprises at least two interconnected grating elements.

5. The platform (200) of any preceding claim, further comprising a plate (30), and wherein the plate is supported by the grid structure (10) comprising a plurality of truss sections as load carrying elements, and wherein the truss sections are elongated and protrude in a direction parallel to the plate.

6. The platform (200) of claim 5, wherein at least one truss section further comprises an arc element.

7. The platform (200) of claim 5 or claim 6, further comprising a ring fixed to outermost sections of the truss sections, preferably by welding.

8. The platform (200) of any preceding claim, further comprising fixation elements for mounting to the tower wall, preferably brackets, and wherein the ring of the platform is adapted to fit into grooves in the fixation elements.

9. The platform (200) of any preceding claim, wherein the platform comprises at least one element selected from the group consisting of: a hatch (80), and a duct.

10. A wind turbine (500), comprising:
a tower (520),
a nacelle (522),
a hub (526),
at least two rotor blades (528),
a self-supporting platform (200) located in the tower, comprising a grid structure (10) comprising a plurality of grid nodes,
fixation elements at a wall of the tower (520),
wherein the grid structure (10) is adapted to transfer a load on the platform (200) to the fixation elements.
